# EUROPÄISCHE PATENTSCHRIFT

(11) **EP 3 694 750 B1**
(45) Veröffentlichungstag und Bekanntmachung des Hinweises auf die Patenterteilung: **07.07.2021**
(21) Anmeldenummer: 18743492.3
(22) Anmeldetag: 20.07.2018
(51) Int. Cl.: B60R 19/52, B60R 13/04

(54) **MONTAGEVERFAHREN FÜR EIN KÜHLERSCHUTZGITTER UND KÜHLERSCHUTZGITTER FÜR EIN FAHRZEUG**
METHOD FOR MOUNTING A RADIATOR GRILLE, AND RADIATOR GRILLE FOR A VEHICLE
DISPOSITIF DE MONTAGE POUR UNE GRILLE DE RADIATEUR ET GRILLE DE RADIATEUR POUR UN VÉHICULE

(30) Priorität: 10.10.2017 DE 102017009380
(43) Veröffentlichungstag der Anmeldung: 19.08.2020
(73) Patentinhaber: Audi AG, 85045 Ingolstadt (DE)
(72) Erfinder: NEUBERGER, Jörg, 85055 Ingolstadt (DE); HEINZELMANN, Heiner, 85055 Ingolstadt (DE); BRENDEL, Christian, 85072 Eichstätt (DE); GARAND, Dany, 85049 Ingolstadt (DE)
(86) Internationale Anmeldenummer: PCT/EP2018/069711
(87) Internationale Veröffentlichungsnummer: WO 2019/072430

(56) Entgegenhaltungen:
- WO-A1-2009/145683
- DE-A1-102012 013 699
- DE-A1-102013 017 131
- FR-A1- 2 903 359
- US-A- 2 854 104
- US-A1- 2017 008 473

## Beschreibung

Die Erfindung betrifft ein Montageverfahren für ein Kühlerschutzgitter gemäß der Gattung des Patentanspruchs 1. Des Weiteren betrifft die Erfindung ein korrespondierendes Kühlerschutzgitter für ein Fahrzeug gemäß der Gattung des Patentanspruchs 4.

Montageverfahren für Kühlerschutzgitter sowie korrespondierende Kühlerschutzgitter für Fahrzeuge sind in zahlreichen Variationen bekannt. Hierbei weisen die Kühlerschutzgitter in der Regel einen Rahmen und eine in dem Rahmen angeordnete Gitterstruktur auf, wobei mehrere Applikationselemente mit der Gitterstruktur verbunden sein können. Die Applikationselemente werden in einem solchen Montageverfahren mit der Gitterstruktur verbunden. Hierbei werden die Applikationselemente bei den bekannten Montageverfahren einzeln mit der Gitterstruktur verbunden. Die Applikationselemente können beispielsweise auf die Gitterstruktur aufgesetzt und/oder aufgesteckt werden, um ein gewünschtes Muster oder einen gewünschten optischen Effekt auf dem Kühlerschutzgitter zu erzielen.

Aus der EP 2 890 580 B1 ist eine aktive Grillblendenanordnung bekannt, welche einen zusammengesetzten modularen Rahmen umfasst. Dieser Rahmen umfasst mehrere zusammengesetzte Teile, so dass der aus den montierten Teilen gebildete Rahmen an aktive Grillanordnungen und an statische Grillanordnungen angepasst werden kann. Bei aktiven Grillanordnungen können Parameter eines Luftstroms, welcher in einen Motorraum einströmt, eingestellt werden. Bei statischen Grillanordnungen können Parameter des Luftstroms, welcher in einen Motorraum einströmt, nicht eingestellt werden.

Aus der WO 2009/145683 A1 ist eine spritzgegossene Kühlergrillstruktur für Kraftfahrzeuge bekannt. Die Kühlergrillstruktur umfasst Rippen und Öffnungen, die über die Struktur angeordnet sind, um eine Belüftungsöffnung in einem Fahrzeug abzudecken. Die Gitterstruktur umfasst auch zwei oder mehr Gitterfeldsegmente, die über mehrere Befestigungsmittel miteinander verbunden sind, die auf Oberflächen der Rippen angeordnet sind.

Aus der WO 2013/127483 A2 ist ein gattungsgemäßes Kühlerschutzgitter für einen Kraftwagen, mit einem umlaufenden Rahmen bekannt, durch dessen Rahmenelemente ein Freiraum begrenzt und in welchen ein Gitterfeld eingesetzt ist. Eine Mehrzahl von innerhalb des Freiraums verlaufenden Streben sind mit dem Rahmen verbunden und bilden eine Gitterstruktur, in welche eine Mehrzahl von als Ziergitter ausgebildeten Applikationselementen angebracht wird, welche das Gitterfeld bilden. Der Rahmen mit der Gitterstruktur weist eine dem Motorraum zugewandte Innenseite und eine vom Motorraum abgewandte Außenseite auf, wobei die Ziergitter an der vom Motorraum abgewandten Außenseite der Gitterstruktur von vorne montiert werden.

Als nachteilig kann bei bekannten Montageverfahren für Kühlerschutzgitter und korrespondierenden Kühlerschutzgitter der Umstand anzusehen werden, dass mit der Anzahl der zu montierenden Applikationselemente der Montageaufwand und die Kosten steigen.

Der Erfindung liegt die Aufgabe zu Grunde, ein Montageverfahren für ein Kühlerschutzgitter bereitzustellen, welches eine zeitsparende und kostengünstige Montage eines korrespondierenden Kühlerschutzgitters ermöglicht.

Diese Aufgabe wird durch ein Montageverfahren für ein Kühlerschutzgitter mit den Merkmalen des Patentanspruchs 1, und durch ein Kühlerschutzgitter mit den Merkmalen des Patentanspruchs 4 gelöst. Vorteilhafte Ausgestaltungen mit zweckmäßigen Weiterbildungen der Erfindung sind in den abhängigen Patentansprüchen angegeben.

Um ein Montageverfahren für ein Kühlerschutzgitter bereitzustellen, welches eine zeitsparende und kostengünstige Montage eines korrespondierenden Kühlerschutzgitters ermöglicht, werden mehrere Applikationselemente zu mindestens einem gitterförmigen Strukturmodul zusammengefasst, wobei das mindestens eine Strukturmodul mit einem vorgegeben Bereich der Gitterstruktur und/oder mit einem vorgegebenen Bereich des Rahmens verbunden wird.

Zudem weist die Gitterstruktur im eingebauten Zustand eine, einem Motorraum zugewandte Innenseite auf, wobei das mindestens eine Strukturmodul an der Innenseite angelegt wird und die Applikationselemente in korrespondierende Gitterzellen und/oder Zwischenräume der Gitterstruktur geschoben werden. In vorteilhafter Weise entstehen an der von außen nicht sichtbaren Innenseite des erfindungsgemäßen Kühlerschutzgitters Verbindungsbereiche, an denen das Strukturmodul mit der Gitterstruktur oder mit dem Rahmen verbunden wird. Zudem kann durch das Einschieben des Strukturmoduls in vorteilhafter Weise eine Vorfixierung des Strukturmodul an der Gitterstruktur erfolgen, welche das endgültige Befestigen des Strukturmoduls erleichtern kann, da ein Verrutschen des angelegten Strukturmoduls durch die eingeschobenen Applikationselemente zumindest erschwert ist. Im montierten Zustand sind in vorteilhafter Weise Teilflächen des Strukturmoduls an einer Außenseite der Gitterstruktur sichtbar. Die Außenseite der Gitterstruktur ist hierbei einem Außenbereich zugewandt. Die sichtbaren Teilflächen des Strukturmoduls betonen die Gitterstruktur oder Bereiche der Gitterstruktur des erfindungsgemäßen Kühlerschutzgitters und erzeugen dadurch gewünschte Muster oder gewünschte optische Effekte auf dem Kühlerschutzgitter.

Unter einem Kühlerschutzgitter kann im Folgenden ein an einer Fahrzeugfront angeordneter Kühlergrill verstanden werden. Das Kühlerschutzgitter kann Einlassöffnungen für einen Luftstrom zu einem Kühler zumindest teilweise abdecken oder vor Schmutz schützen. Üblicherweise trägt das Kühlerschutzgitter zu einem spezifischen Aussehen der Fahrzeugfront des Fahrzeugs bei, welches der Kunde einer Automarke oder einem Fahrzeugmodell zuordnen kann. Dadurch kann der Wiedererkennungswert der Automarke oder des Fahrzeugmodells gesteigert werden.

Unter einem Applikationselement wird im Folgenden eine Zierleiste und/oder ein Designelement verstanden, mit welchen ein vorgegebener optischer Eindruck der Fahrzeugfront des Fahrzeugs erzielt oder verbessert werden kann. Die Abmessungen der Gitterzellen des gitterförmigen Strukturmoduls entsprechen hierbei den Abmessungen der Applikationselemente, welche in diesem Bereich einzeln montiert werden würden.

Unter dem Montageverfahren für das Kühlerschutzgitter wird im Folgenden das Zusammensetzen des Kühlerschutzgitters aus den Einzelteilen verstanden.

In vorteilhafter Weise kann das mindestens eine Strukturmodul einfach schnell und kostengünstig hergestellt und am Gitterelement und/oder am Rahmen befestigt werden. Hierbei werden in vorteilhafter Weise mehrere Applikationselemente in einem Schritt am Gitterelement befestigt. Wodurch insbesondere Montagezeit eingespart werden kann. Das gitterförmige Strukturmodul kann in vorteilhafter Weise an Kundenwünsche oder Herstellerwünsche angepasst werden, so dass weiterhin eine individuelle Gestaltung des erfindungsgemäßen Kühlerschutzgitters möglich ist. Hierbei kann ein einzelnes Strukturmodul ein vorgegebenes Muster oder einen optischen Effekt nur in einem vorgegeben Teilbereich der Gitterstruktur oder über einen gesamten Ausdehnungsbereich der Gitterstruktur erzeugen. Zudem können mehrere Strukturmodule vorgegebene Muster und optische Effekte in vorgegebenen Bereichen der Gitterstruktur erzeugen. Abmessungen der Gitterzellen des Strukturmoduls, können in vorteilhafter Weise so wie die bisher verwendeten, einzelnen Applikationselemente an die Form der Gitterzellen oder an eine Form von Zwischenräumen zwischen benachbarten Gitterzellen der Gitterstruktur angepasst werden.

In weiterer vorteilhafter Ausgestaltung des erfindungsgemäßen Montageverfahrens kann das mindestens eine Strukturmodul mit der Gitterstruktur und/oder dem Rahmen verclipst und/oder verschweißt und/oder verklebt und/oder verschraubt werden. Durch Verclipsen und/oder Verschweißen und/oder Verkleben und/oder Verschrauben kann in vorteilhafter Weise eine dauerhafte zuverlässige Verbindung zwischen dem mindestens einen Strukturmodul und der Gitterstruktur sowie zwischen dem mindestens einen Strukturmodul und dem Rahmen geschaffen werden.

In weiterer vorteilhafter Ausgestaltung des erfindungsgemäßen Montageverfahrens können mehrere Strukturmodule miteinander verclipst und/oder verschweißt und/oder verklebt und/oder verschraubt werden. Hierbei können die Strukturmodule vor dem Einsetzten in die der Gitterstruktur oder nach dem Einsetzten in die Gitterstruktur mit einander verbunden werden. Durch das Verclipsen und/oder Verschweißen und/oder Verkleben und/oder Verschrauben kann in vorteilhafter Weise eine dauerhafte zuverlässige Verbindung zwischen den einzelnen Strukturmodulen geschaffen werden.

In vorteilhafter Ausgestaltung des erfindungsgemäßen Kühlerschutzgitters kann die Gitterstruktur und/oder das mindestens eine Strukturmodul als Spritzgussteil ausgeführt werden. Spritzgussteile sind in vorteilhafter Weise in großen Mengen bei gleichbleibender Qualität kostengünstig herstellbar. Zudem weisen Spritzgussteile ein geringes Gewicht auf. Der Rahmen und die Gitterstruktur können in vorteilhafter Weise ebenfalls als Spritzgussteile hergestellt werden. So kann der Rahmen mit der Gitterstruktur gemeinsam in einem Spritzgussvorgang als ein Bauteil oder als getrennte Bauteile einzeln hergestellt werden, welche zu einem späteren Zeitpunkt miteinander verbunden werden können.

In vorteilhafter Ausgestaltung des erfindungsgemäßen Kühlerschutzgitters kann die Gitterstruktur und/oder das mindestens eine Strukturmodul zumindest teilweise eine Oberflächenbeschichtung aufweisen. Beispielsweise kann das mindestens eine Strukturmodul eine Kontrastfarbe zu dem korrespondierenden Bereich der Gitterstruktur aufweisen, in welchem das mindestens eine Strukturmodul angeordnet ist. Hierbei können mehrere Strukturmodule unterschiedliche Farben oder Beschichtungen aufweisen. Zudem können verschiedene Bereiche der Gitterstruktur unterschiedliche Farben und Beschichtungen aufweisen. Die Farbkombinationen und Beschichtungskombinationen können in vorteilhafter Weise an Herstellerwünsche und/oder Kundenwünsche angepasst werden. Als mögliche Beschichtungsverfahren können beispielsweise Galvanisieren und/oder Lackieren eingesetzt werden.

In weiterer vorteilhafter Ausgestaltung des erfindungsgemäßen Kühlerschutzgitters können die Gitterzellen der Gitterstruktur wabenförmig und/oder rechteckig und/oder rautenförmig ausgeführt werden. Durch die unterschiedlichen Formen und Abmessungen sowie durch die Kombination der unterschiedlichen Abmessungen und Formen der Gitterzellen können unterschiedlich wirkende Bereiche für das Kühlerschutzgitter geschaffen werden, welche in vorteilhafter Weise einen Widererkennungswert eines Fahrzeugmodells steigern können.

In weiterer vorteilhafter Ausgestaltung des erfindungsgemäßen Kühlerschutzgitters kann die Gitterstruktur Gitterzellen aufweisen, welche durch Zwischenräume zueinander beabstandet sind, wobei die Gitterzellen über die Zwischenräume überbrückende Stege miteinander verbunden sein können. Alternativ oder zusätzlich kann die Gitterstruktur direkt aneinander anliegende Gitterzellen aufweisen, welche mindestens eine gemeinsame Wand aufweisen können. Durch die Gitterzellen mit einer gemeinsamen Wand teilen oder durch die Gitterzellen, welche durch Zwischenräume voneinander getrennt sind, lassen sich unterschiedliche stabile Gitterstrukturen schaffen. Zudem können die Gitterzellen des mindestens einen Strukturmoduls sowohl in den Zwischenräumen als auch in den Gitterzellen der Gitterstruktur angeordnet werden, wodurch unterschiedliche Muster und optische Effekte entstehen können.

In weiterer vorteilhafter Ausgestaltung des erfindungsgemäßen Kühlerschutzgitters kann das mindestens eine Strukturmodul die Gitterzellen und/oder die Zwischenräume zumindest teilweise ausfüllen. Hierbei können die Zwischenräume und die Gitterzellen in vorteilhafter Weise auch vollständig von dem mindestens einen Strukturmodul ausgefüllt werden. Alternativ können einzelne bzw. ausgewählte Gitterzellen oder Zwischenräume ganz oder teilweise oder gar nicht ausgefüllt werden. Dadurch kann eine Vielzahl an Kombinationen für unterschiedliche Effekte, Muster oder zum Stabilisieren der Gitterstruktur umgesetzt werden.

In weiterer vorteilhafter Ausgestaltung des erfindungsgemäßen Kühlerschutzgitters kann die Gitterstruktur und das mindestens eine Strukturmodul mindestens eine Schweißlasche und/oder mindestens ein Rastelement und/oder mindestens eine korrespondierende Aufnahmeöffnung aufweisen. Durch die mindestens eine Schweißlasche und die korrespondierende mindestens eine Aufnahmeöffnung können das mindestens eine Strukturmodul und die Gitterstruktur einfach und schnell miteinander verschweißt werden. Durch die Rastelemente können die Gitterstruktur und das mindestens eine Strukturmodul einfach und schnelle miteinander verrastet oder verclipst werden. Zudem können mehrere Strukturmodule einfach und schnell über die mindestens eine Schweißlasche und/oder das mindestens eine Rastelement und/oder die mindestens eine korrespondierende Aufnahmeöffnung miteinander verbunden werden.

Die für das erfindungsgemäße Montageverfahren für ein Kühlerschutzgitter beschriebenen Vorteile und bevorzugten Ausführungsformen gelten auch für des erfindungsgemäße Kühlerschutzgitter und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: eine schematische perspektivische Darstellung eines Ausführungsbeispiels eines teilmontierten erfindungsgemäßen Kühlerschutzgitters von außen;
- Fig. 2: eine vergrößerte Darstellung eines Bereichs des erfindungsgemäßen Kühlerschutzgitters aus Fig. 2 während eines Verfahrensschritts von Innen, in welchem Applikationselemente eines Strukturmoduls in Gitterzellen oder Zwischenräume einer Gitterstruktur eingeschoben werden;
- Fig. 3: eine schematische perspektivische Darstellung des Ausschnitts des erfindungsgemäßen Kühlerschutzgitters aus Fig. 3 nach dem Verbinden des Strukturmoduls mit der Gitterstruktur von innen; und
- Fig. 4: eine schematische perspektivische Darstellung des erfindungsgemäßen Kühlerschutzgitters aus Fig 2 bis 4 in einem montierten Zustand von außen.
- Fig. 5: ein schematisches Flussdiagramm eines Ausführungsbeispiels eines erfindungsgemäßen Montageverfahrens;

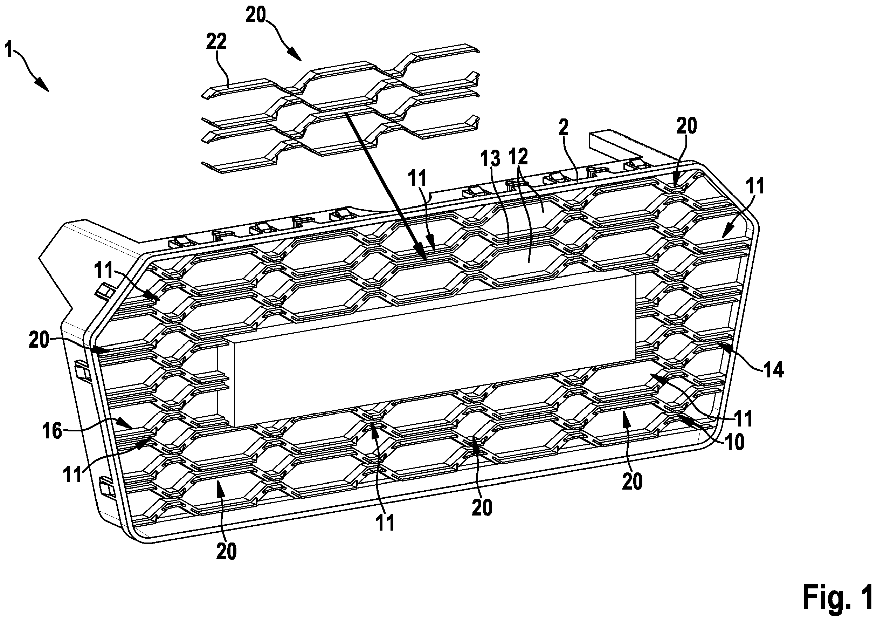

Wie aus Fig. 1 bis 4 ersichtlich ist, weist ein Kühlerschutzgitter 1 für ein Fahrzeug im dargestellten Ausführungsbeispiel einen Rahmen 2 und eine in dem Rahmen 2 angeordnete Gitterstruktur 10 auf, wobei die Gitterstruktur 10 mehrere Applikationselemente 22 aufweist.

Erfindungsgemäß werden die mehreren Applikationselemente 22 zu mindestens einem gitterförmigen Strukturmodul 20 zusammengefasst, wobei das mindestens eine Strukturmodul 20 mit einem vorgegeben Bereich 11 der Gitterstruktur 10 und/oder mit einem vorgegebenen Bereich des Rahmens 2 verbunden ist.

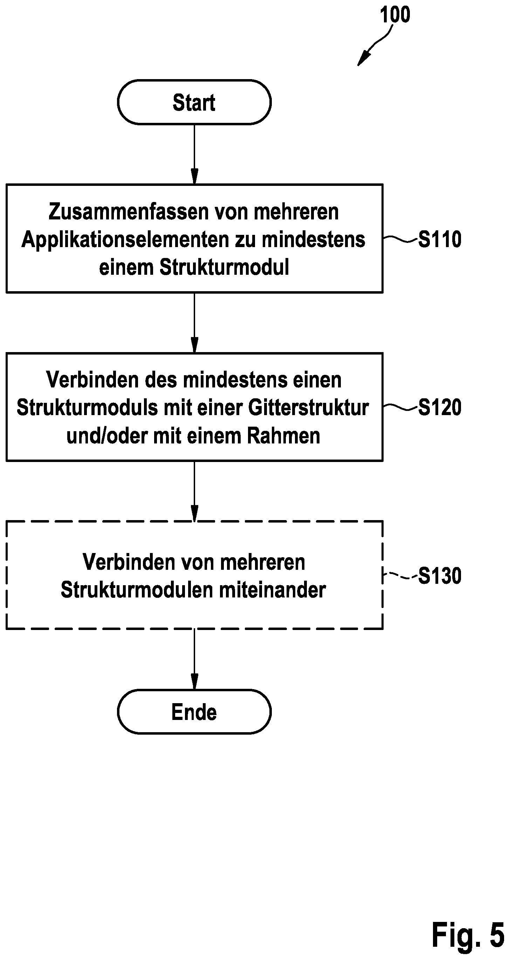

Wie aus Fig. 5 ersichtlich ist, weist das dargestellte Ausführungsbeispiel eines Montageverfahrens 100 für ein Kühlerschutzgitter 1, welches den Rahmen 2 und die im Rahmen 2 angeordnete Gitterstruktur 10 umfasst, einen Montageschritt S110 auf, in welchem mehrere Applikationselemente 22 zu dem mindestens einen gitterförmigen Strukturmodul 20 zusammengefasst werden. In einem weiteren Montageschritt S120 wird das mindestens eine Strukturmodul 20 mit einem vorgegeben Bereich 11 der Gitterstruktur 10 und/oder mit einem vorgegebenen Bereich des Rahmens 2 verbunden.

Hierbei kann Verbinden des mindestens einen Strukturmoduls 20 mit der Gitterstruktur 10 und/oder dem Rahmen 2 durch Verclipsen oder Verschweißen oder Verkleben oder Verschrauben oder durch eine andere geeignete Verbindungstechnik oder aus einer Kombination von verschiedenen Verbindungstechniken erfolgen.

Wie aus Fig. 5 weiter ersichtlich ist, können in einem zusätzlichen Montageschritt S130 mehrere Strukturmodule 20 miteinander verbunden werden. Der Schritt S130 kann vor dem Verbinden oder nach dem Verbinden der Strukturmodule mit der Gitterstruktur 10 erfolgen.

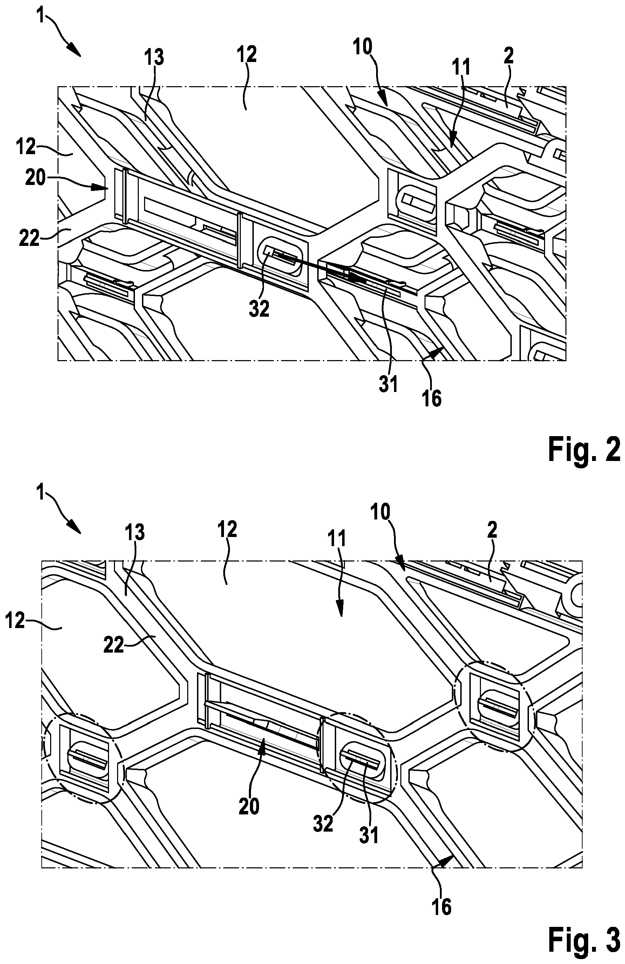

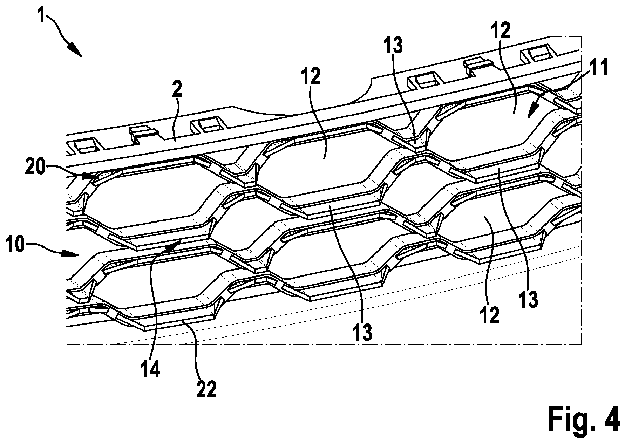

Wie aus Fig. 1 bis 4 weiter ersichtlich ist, weist die Gitterstruktur 10 im eingebauten Zustand eine, einem Motorraum zugewandte Innenseite 16 und eine, dem Motorraum abgewandte nach außen gerichtete Außenseite 14 auf. Wie aus Fig. 2 weiter ersichtlich ist, wird das mindestens eine Strukturmodul 20 an der Innenseite 16 angelegt und die Applikationselemente 22 werden in korrespondierende Gitterzellen 12 und/oder Zwischenräume 13 der Gitterstruktur 10 geschoben. Wie aus Fig. 3 weiter ersichtlich ist, werden Bereiche des Strukturmoduls 20 anschließend oder während des Einschiebens mit der Gitterstruktur 10 verschweißt und/oder verclipst und/oder verklebt und/oder verschraubt. Wie aus Fig. 4 weiter ersichtlich ist, sind Teilflächen der Applikationselemente 22 des Strukturmoduls 20 im montierten Zustand von der der Innenseite 16 gegenüberliegenden Außenseite 14 der Gitterstruktur 10 sichtbar.

Wie aus Fig. 1 bis 4 weiter ersichtlich ist, weist das erfindungsgemäße Kühlerschutzgitter 1 Applikationselemente 22 auf, welche jeweils zu mehreren gitterförmigen Strukturmodulen 20 zusammengefasst sind, wobei die Strukturmodule 20 jeweils mit einem vorgegeben Bereich 11 der Gitterstruktur 10 und/oder mit einem vorgegebenen Bereich des Rahmens 2 verbunden sind.

Im dargestellten Ausführungsbeispiel des erfindungsgemäßen Kühlerschutzgitters 1 weist die Gitterstruktur 10 sechs Bereiche 11 auf, welchen jeweils ein Strukturmodul 20 zugeordnet ist. In einem alternativen nicht dargestellten Ausführungsbeispiel des erfindungsgemäßen Kühlerschutzgitters 1 können mehr oder weniger als sechs Strukturmodule 20 mit der Gitterstruktur 10 verbunden werden. Zudem kann die Gitterstruktur 10 in einem alternativen nicht dargestellten Ausführungsbeispiel des erfindungsgemäßen Kühlerschutzgitters 1 Bereiche aufweisen, denen kein Strukturmodul 20 zugeordnet ist.

Wie aus Fig. 1 bis 4 weiter ersichtlich ist, entsprechen die Applikationselemente 22 Zierleisten und/oder Designelementen, welche an die Form der Gitterzellen 12 oder an die Form der Zwischenräume 13 zwischen den Gitterzellen der Gitterstruktur 10 des erfindungsgemäßen Kühlerschutzgitters 1 angepasst sind.

Wie aus Fig. 1 bis 4 weiter ersichtlich ist, sind der Rahmen 2 und die Gitterstruktur 10 des erfindungsgemäßen Kühlerschutzgitters 1 im dargestellten Ausführungsbeispiel einstückig ausgeführt. In einem alternativen nicht dargestellten Ausführungsbeispiel des erfindungsgemäßen Kühlerschutzgitters 1 können der Rahmen 2 und die Gitterstruktur 10 als separate Teile hergestellt und in einem zusätzlichen Montageschritt miteinander verbunden werden.

Im dargestellten Ausführungsbeispiel sind die Gitterstruktur 10 und die Strukturmodule 20 jeweils als Spritzgussteile ausgeführt. Selbstverständlich ist die Herstellung der genannten Bauteile nicht auf das Spritzgießen beschränkt und es können auch andere geeignete Verfahren zur Herstellung der genannten Bauteile eingesetzt werden.

Wie aus Fig. 1 bis 4 weiter ersichtlich ist, weisen die Gitterstruktur 10 und die Strukturmodule 20 eine Oberflächenbeschichtung auf. Hierbei ist die Gitterstruktur 10 beispielsweise silbergrau lackiert und die Strukturmodule 10 können verschiedene Farben aufweisen, so können beispielsweise zwei Strukturmodule 20 gelb, zwei Strukturmodule 20 blau, ein Strukturmodul 20 lila und ein Strukturmodul 20 rot lackiert werden. In einem alternativen nicht dargestellten Ausführungsbeispiel des erfindungsgemäßen Kühlerschutzgitters 1 können die Bereiche 11 der Gitterstruktur 10, mit denen die Strukturmodule 20 verbunden sind, ebenfalls mit unterschiedlichen Farben lackiert werden. Selbstverständlich sind auch andere Farben und andere Farbkombinationen vorstellbar und umsetzbar. Zudem kann die Oberfläche der Gitterstruktur 10 und/oder die Oberfläche von mindestens einem Strukturmodul 20 durch Galvanisieren beschichtet werden.

Wie aus Fig. 1 bis 4 weiter ersichtlich ist, sind die Gitterzellen 12 der Gitterstruktur 10 im dargestellten Ausführungsbeispiel als wabenförmige Sechsecke ausgeführt. Alternativ kann die Gitterstruktur 10 auch mit rechteckigen oder rautenförmigen Gitterzellen 12 oder mit wabenförmigen Gitterzellen ausgeführt werden, welche mehr oder weniger als sechs Ecken aufweisen. Zudem ist eine Kombination aus wabenförmigen oder rechteckigen oder rautenförmigen Gitterzellen 12 umsetzbar.

Wie aus Fig. 1 bis 4 weiter ersichtlich ist, weist die Gitterstruktur 10 Gitterzellen 12 auf, welche durch Zwischenräume 13 zueinander beabstandet sind, wobei die Gitterzellen 12 über die Zwischenräume 13 überbrückende Stege miteinander verbunden sind. In einem alternativen nicht dargestellten Ausführungsbeispiel kann die Gitterstruktur 10 direkt aneinander anliegende Gitterzellen 12 aufweisen, welche zumindest eine gemeinsame Wand aufweisen. Zudem ist eine Kombination aus zueinander beabstandeten und direkt aneinander anliegenden Gitterzellen 12 vorstellbar.

Wie aus Fig. 1 bis 4 weiter ersichtlich ist, füllen im dargestellten Ausführungsbeispiel des erfindungsgemäßen Kühlerschutzgitters 1 die Strukturmodul 20 die Zwischenräume 13 vollständig aus. Hierbei umrahmen die Zwischenräume 13 die Gitterzellen 12, welche dadurch betont werden. In einem nicht dargestellten Ausführungsbeispiel des erfindungsgemäßen Kühlerschutzgitters 1 können die Strukturmodule 20 die Zwischenräume nur teilweise ausfüllen. Zudem ist in einem alternativen nicht dargestellten Ausführungsbeispiel des erfindungsgemäßen Kühlerschutzgitters 1 ein teilweises oder vollständiges Ausfüllen der Gitterzellen 12 durch mindestens ein Strukturmodul 20 umsetzbar. Zudem können Zwischenräume 13 oder Gitterzellen abwechselnd teilweise, vollständig oder gar nicht durch die Strukturmodule 20 ausgefüllt werden.

Wie aus Fig. 2 und 3 weiter ersichtlich ist, weist die Gitterstruktur 10 im dargestellten Ausführungsbeispiel mehrere Schweißlaschen 31 auf, welche in korrespondierende Aufnahmeöffnungen 32 des mindestens einen Strukturmoduls 20 eingeführt und verschweißt werden. Alternativ oder zusätzlich können die Gitterstruktur 10 und das mindestens eine Strukturmodul 20 Rastelemente aufweisen. Zudem kann der Rahmen 2 Schweißlaschen 31 oder Rastelemente aufweisen. Über die Schweißlaschen 31 und/oder Rastelemente und/oder korrespondierende Aufnahmeöffnungen 32 wird das Strukturmodul 20 mit der Gitterstruktur 10 oder dem Rahmen 2 oder einem anderen Strukturmodul 20 verbunden.

### BEZUGSZEICHENLISTE

- 1: Kühlerschutzgitter
- 2: Rahmen
- 10: Gitterstruktur
- 11: Bereich für ein Strukturmodul
- 12: Gitterzelle
- 13: Zwischenraum
- 14: Außenseite
- 16: Innenseite
- 20: Strukturmodul
- 22: Applikationselement
- 31: Schweißlasche
- 32: Aufnahmeöffnung
- 100: Montageverfahren
- S110, S120, S130: Verfahrensschritt

## Patentansprüche

1. Montageverfahren (100) für ein Kühlerschutzgitter (1) mit einem Rahmen (2) und einer in dem Rahmen (2) angeordneten Gitterstruktur (10), wobei mindestens ein gitterförmiges Strukturmodul (20) mit einem vorgegeben Bereich (11) der Gitterstruktur (10) und/oder mit einem vorgegebenen Bereich des Rahmens (2) verbunden wird, und wobei die Gitterstruktur (10) im eingebauten Zustand eine, einem Motorraum zugewandte Innenseite (16) aufweist,
**dadurch gekennzeichnet, dass**
mehrere Applikationselemente (22) zu dem mindestens einen gitterförmigen Strukturmodul (20) zusammengefasst werden und das mindestens eine Strukturmodul (20) an der Innenseite (16) angelegt wird und die Applikationselemente (22) in korrespondierende Gitterzellen (12) und/oder Zwischenräume (13) der Gitterstruktur (10) geschoben werden, so dass im montierten Zustand Teilflächen des mindestens einen Strukturmoduls (20) an einer Außenseite der Gitterstruktur (10) sichtbar sind und die Gitterstruktur (10) oder Bereiche der Gitterstruktur (10) betonen und gewünschte Muster oder gewünschte optische Effekte auf dem Kühlerschutzgitter (1) erzeugen.

2. Montageverfahren (100) nach Anspruch 1,
**dadurch gekennzeichnet, dass**
das mindestens eine Strukturmodul (20) mit der Gitterstruktur (10) und/oder dem Rahmen (2) verclipst und/oder verschweißt und/oder verklebt und/oder verschraubt wird.

3. Montageverfahren (100) nach Anspruch 1 oder 2,
**dadurch gekennzeichnet, dass**
mehrere Strukturmodule (20) miteinander verclipst und/oder verschweißt und/oder verklebt und/oder verschraubt werden.

4. Kühlerschutzgitter (1) für ein Fahrzeug, mit einem Rahmen (2) und einer in dem Rahmen (2) angeordneten Gitterstruktur (10), wobei mindestens ein gitterförmiges Strukturmodul (20) mit einem vorgegeben Bereich (11) der Gitterstruktur (10) und/oder mit einem vorgegebenen Bereich des Rahmens (2) verbunden ist, und wobei die Gitterstruktur (10) im eingebauten Zustand eine, einem Motorraum zugewandte Innenseite (16) aufweist,
**dadurch gekennzeichnet, dass**
mehrere Applikationselemente (22) zu dem mindestens einen gitterförmigen Strukturmodul (20) zusammengefasst sind, wobei das mindestens eine Strukturmodul (20) an der Innenseite (16) angelegt ist und die Applikationselemente (22) so in korrespondierende Gitterzellen (12) und/oder Zwischenräume (13) der Gitterstruktur (10) geschoben sind, dass im montierten Zustand Teilflächen des mindestens einen Strukturmoduls (20) an einer Außenseite der Gitterstruktur (10) sichtbar sind und die Gitterstruktur (10) oder Bereiche der Gitterstruktur (10) betonen und gewünschte Muster oder gewünschte optische Effekte auf dem Kühlerschutzgitter (1) erzeugen.

5. Kühlerschutzgitter (1) nach Anspruch 4,
**dadurch gekennzeichnet, dass**
die Gitterstruktur (10) und/oder das mindestens eine Strukturmodul (20) als Spritzgussteil ausgeführt ist.

6. Kühlerschutzgitter (1) nach Anspruch 4 oder 5,
**dadurch gekennzeichnet, dass**
die Gitterstruktur (10) und/oder das mindestens eine Strukturmodul (20) zumindest teilweise eine Oberflächenbeschichtung aufweisen.

7. Kühlerschutzgitter (1) nach einem der Ansprüche 4 bis 6,
**dadurch gekennzeichnet, dass**
die Gitterzellen (12) der Gitterstruktur (10) wabenförmig und/oder rechteckig und/oder rautenförmig ausgeführt sind.

8. Kühlerschutzgitter (1) nach einem der Ansprüche 4 bis 7,
**dadurch gekennzeichnet, dass**
die Gitterstruktur (10) mehrere Gitterzellen (12) aufweist, welche durch Zwischenräume (13) zueinander beabstandet sind, wobei die Gitterzellen (12) über die Zwischenräume (13) überbrückende Stege miteinander verbunden sind.

9. Kühlerschutzgitter (1) nach einem der Ansprüche 4 bis 8,
**dadurch gekennzeichnet, dass**
die Gitterstruktur (10) direkt aneinander anliegende Gitterzellen (12) aufweist, welche mindestens eine gemeinsame Wand aufweisen.

10. Kühlerschutzgitter (1) nach einem der Ansprüche 4 bis 9,
**dadurch gekennzeichnet, dass**
das mindestens eine Strukturmodul (20) die Gitterzellen (12) und/oder die Zwischenräume (13) zumindest teilweise ausfüllt.

11. Kühlerschutzgitter (1) nach einem der Ansprüche 4 bis 10,
**dadurch gekennzeichnet, dass**
die Gitterstruktur (10) und das mindestens eine Strukturmodul (20) mindestens eine Schweißlasche (31) und/oder mindestens ein Rastelement und/oder mindestens eine korrespondierende Aufnahmeöffnung (32) aufweisen.

## Claims

1. Method (100) for assembling a radiator grille (1) having a frame (2) and a grille structure (10) arranged in the frame (2), whereby at least one grille-like structure module (20) is connected to a predetermined region (11) of the grille structure (10) and/or to a predetermined region of the frame (2), and whereby the grille structure (10) in the installed state has an inner side (16) facing an engine compartment,
**characterised in that**
a plurality of application elements (22) are assembled to form at least one grille-like structure module (20) and the at least one structure module (20) is placed on the inner side (16) and the application elements (22) are pushed into corresponding grille cells (12) and/or intermediate spaces (13) in the grille structure (10), so that in the assembled state part-surfaces of the at least one structure module (20) are visible on an outer side of the grille structure (10) and emphasise the grille structure (10) or regions of the grille structure (10) and produce desired patterns or desired optical effects on the radiator grille (1).

2. Assembly method (100) according to claim 1,
**characterised in that**
the at least one structure module (20) is clipped and/or welded and/or glued and/or screwed to the grille structure (10) and/or to the frame (2).

3. Assembly method (100) according to claim 1 or 2,
**characterised in that**
a plurality of structure modules (20) are clipped and/or welded and/or glued and/or screwed to one another.

4. Radiator grille (1) for a vehicle, having a frame (2) and a grille structure (10) arranged in the frame (2), whereby at least one grille-like structure module (20) is connected to a predetermined region (11) of the grille structure (10) and/or to a predetermined region of the frame (2), and whereby the grille structure (10) in the installed state has an inner side (16) facing an engine compartment,
**characterised in that**
a plurality of application elements (22) are assembled to form at least one grille-like structure module (20), whereby the at least one structure module (20) is placed on the inner side (16) and the application elements (22) are pushed into corresponding grille cells (12) and/or intermediate spaces (13) in the grille structure (10), so that in the assembled state part-surfaces of the at least one structure module (20) are visible on an outer side of the grille structure (10) and emphasise the grille structure (10) or regions of the grille structure (10) and produce desired patterns or desired optical effects on the radiator grille (1).

5. Radiator grille (1) according to claim 4,
**characterised in that**
the grille structure (10) and/or the at least one structure module (20) is embodied as an injection moulded part.

6. Radiator grille (1) according to claim 4 or 5,
**characterised in that**
at least parts of the grille structure (10) and/or of the at least one structure module (20) have a surface coating.

7. Radiator grille (1) according to any of claims 4 to 6,
**characterised in that**
the grille cells (12) of the grille structure (10) are honeycomb-shaped and/or rectangular and/or rhomboid.

8. Radiator grille (1) according to any of claims 4 to 7,
**characterised in that**
the grille structure (10) has a plurality of grille cells (12) which are distanced from one another by intermediate spaces (13), whereby the grille cells (12) are connected to one another via webs which bridge the intermediate spaces (13).

9. Radiator grille (1) according to any of claims 4 to 8,
**characterised in that**
the grille structure (10) has grille cells (12) directly abutting one another which have at least one common wall.

10. Radiator grille (1) according to any of claims 4 to 9,
**characterised in that**
the at least one structure module (20) at least partially fills the grille cells (12) and/or the intermediate spaces (13).

11. Radiator grille (1) according to any of claims 4 to 10,
**characterised in that**
the grille structure (10) and the at least one structure module (20) have at least one welded tab (31) and/or at least one detent element and/or at least one corresponding receiving opening (32).

## Revendications

1. Procédé de montage (100) pour une grille de radiateur (1) avec un cadre (2) et une structure de grille (10) disposée dans le cadre (2), dans lequel au moins un module structural (20) en forme de grille est relié à une zone prédéfinie (11) de la structure de grille (10) et/ou à une zone prédéfinie du cadre (2), et dans lequel la structure de grille (10) présente dans l'état monté une face intérieure (16) tournée vers un compartiment moteur,
**caractérisé en ce que**
plusieurs éléments d'application (22) sont réunis en l'au moins un module structural (20) en forme de grille et l'au moins un module structural (20) est placé sur la face intérieure (16) et les éléments d'application (22) sont glissés dans des cellules de grille (12) et/ou espaces intermédiaires (13) correspondants de la structure de grille (10), de sorte que dans l'état monté des surfaces partielles de l'au moins un module structural (20) sont visibles sur une face extérieure de la structure de grille (10) et accentuent la structure de grille (10) ou des zones de la structure de grille (10) et produisent des motifs souhaités ou effets optiques souhaités sur la grille de radiateur (1).

2. Procédé de montage (100) selon la revendication 1,
**caractérisé en ce que**
l'au moins un module structural (20) est clipsé et/ou soudé et/ou collé et/ou vissé à la structure de grille (10) et/ou au cadre (2).

3. Procédé de montage (100) selon la revendication 1 ou 2,
**caractérisé en ce que**
plusieurs modules structuraux (20) sont clipsés et/ou soudés et/ou collés et/ou vissés les uns aux autres.

4. Grille de radiateur (1) pour un véhicule, avec un cadre (2) et une structure de grille (10) disposée dans le cadre (2), dans laquelle au moins un module structural (20) en forme de grille est relié à une zone prédéfinie (11) de la structure de grille (10) et/ou à une zone prédéfinie du cadre (2), et dans laquelle la structure de grille (10) présente dans l'état monté une face intérieure (16) tournée vers un compartiment moteur,
**caractérisée en ce que**
plusieurs éléments d'application (22) sont réunis en l'au moins un module structural (20) en forme de grille, dans laquelle l'au moins un module structural (20) est placé sur la face intérieure (16) et les éléments d'application (22) sont glissés dans des cellules de grille (12) et/ou espaces intermédiaires (13) correspondants de la structure de grille (10), de sorte que dans l'état monté des surfaces partielles de l'au moins un module structural (20) sont visibles sur une face extérieure de la structure de grille (10) et accentuent la structure de grille (10) ou des zones de la structure de grille (10) et produisent des motifs souhaités ou effets optiques souhaités sur la grille de radiateur (1).

5. Grille de radiateur (1) selon la revendication 4,
**caractérisée en ce que**
la structure de grille (10) et/ou l'au moins un module structural (20) est réalisé(e) en tant que pièce moulée par injection.

6. Grille de radiateur (1) selon la revendication 4 ou 5,
**caractérisée en ce que**
la structure de grille (10) et/ou l'au moins un module structural (20) présentent au moins en partie un revêtement de surface.

7. Grille de radiateur (1) selon l'une quelconque des revendications 4 à 6,
**caractérisée en ce que**
les cellules de grille (12) de la structure de grille (10) sont réalisées en nid d'abeille et/ou de manière rectangulaire et/ou en forme de losange.

8. Grille de radiateur (1) selon l'une quelconque des revendications 4 à 7,
**caractérisée en ce que**
la structure de grille (10) présente plusieurs cellules de grille (12), lesquelles sont espacées les unes des autres par des espaces intermédiaires (13), dans laquelle les cellules de grille (12) sont reliées les unes aux autres par l'intermédiaire d'éléments jointifs comblant les espaces intermédiaires (13).

9. Grille de radiateur (1) selon l'une quelconque des revendications 4 à 8,
**caractérisée en ce que**
la structure de grille (10) présente des cellules de grille (12) s'appliquant directement les unes contre les autres, lesquelles présentent au moins une paroi commune.

10. Grille de radiateur (1) selon l'une quelconque des revendications 4 à 9,
**caractérisée en ce que**
l'au moins un module structural (20) remplit au moins en partie les cellules de grille (12) et/ou les espaces intermédiaires (13).

11. Grille de radiateur (1) selon l'une quelconque des revendications 4 à 10,
**caractérisée en ce que**
la structure de grille (10) et l'au moins un module structural (20) présentent au moins une languette de soudage (31) et/ou au moins un élément d'encliquetage et/ou au moins une ouverture de réception (32) correspondante.
